# EUROPEAN PATENT SPECIFICATION

(11) **EP 4 619 306 B1**
(45) Date of publication and mention of the grant of the patent: **26.08.2026**
(21) Application number: 23805136.1
(22) Date of filing: 02.11.2023
(51) Int. Cl.: B64C 3/56, B64C 23/06, B64C 13/16

(54) **MOVEABLE WING TIP ACTUATION SYSTEM**
BETÄTIGUNGSVORRICHTUNG FÜR BEWEGLICHE FLÜGELENDEN
DISPOSITIF D'ACTUATION DE BOUTS D'AILE MOBILES

(30) Priority: 16.11.2022 GB 202217163
(43) Date of publication of application: 24.09.2025
(73) Proprietor: Airbus Operations Limited, Bristol BS34 7PA (GB)
(72) Inventor: WILSON, Thomas, Bristol Bristol BS34 7PA (GB)
(74) Representative: Worthington, Richard Easton
(86) International application number: PCT/GB2023/052864
(87) International publication number: WO 2024/105353

(56) References cited:
- EP-A1- 3 543 110
- CN-A- 112 109 878
- CN-A- 112 693 593
- US-A- 5 558 299
- US-A1- 2020 207 461

## Description

### FIELD OF THE INVENTION

The present invention relates to an aircraft wing with a moveable wing tip device.

### BACKGROUND OF THE INVENTION

Using a moveable wing tip device during flight is known, e.g. from WO2017118832. This document teaches an aircraft wing having a fixed wing with a wing tip device moveably mounted at the tip thereof, wherein the fixed wing has an upper surface and a lower surface, and the wing tip device has an upper surface and a lower surface, and the wing tip device is operable between: (i) a flight configuration for use during flight, in which configuration the upper and lower surfaces of the wing tip device are continuations of the upper and lower surfaces of the fixed wing; and (ii) a load alleviating configuration for load alleviation during flight, in which configuration the wing tip device is moved relative to the fixed wing such that at least one of the upper and lower surfaces of the wing tip device is moved away from the respective surface of the fixed wing, and the load on the wing is reduced; wherein the aircraft comprises a restraining assembly operable between a restraining mode in which the wing tip device is held in the flight configuration using a restraining force, and a releasing mode in which the restraining force on the wing tip device is released, such that the wing tip device is able to adopt the load alleviating configuration. CN112693593A discloses a folding mechanism which is suitable for folding an outer wing folding section of a wing relative to an inner wing fixing section of the wing. US2020/207461A1 discloses an actuator assembly for moving an aircraft wing tip device.

The wing tip device may be entirely passively actuated to the load-alleviating configuration once the restraining assembly is in releasing mode. It may be moved under the action of aerodynamic forces urging the wing tip device towards the load-alleviating configuration. Having the restraining assembly in combination with this hinged wing tip device may be referred to as a "semi-aeroelastic" arrangement).

The wing tip device may be rotatably mounted on a hinge at the tip of the wing, such that it may rotate, about the hinge, between the flight and load alleviating configurations. The wing tip device may also be moveable about the same hinge to a ground configuration for use during ground-based operations, in which ground configuration the wing tip device is moved away from the flight configuration such that the span of the aircraft wing is reduced.

An actuation system may be arranged to move the wing tip device between the flight configuration and the ground configuration. The actuation mechanism may also be arranged to move the wing tip device from the load alleviating configuration back to the flight configuration.

It has been found that the actuation system at the hinge may require a fairing extending beyond the aerofoil profile of the wing and wing tip device, which has a negative impact on aerodynamic drag. The fairing may extend above and/or below, and/or fore and/or aft of the aerofoil profile of the wing and wing tip device.

### SUMMARY OF THE INVENTION

A first aspect of the invention provides an aircraft wing according to claim 1.

The invention is advantageous in that the angle gearbox enables the motor to be located away from the hinge line, thus freeing up more space at the hinge for the geared mechanical actuators (GRAs). This may allow for an increased number of GRAs at the hinge whilst achieving an overall shorter length of the actuation system at the hinge, resulting in a shorter fairing and lower drag impact. Providing an increased number of the GRAs may be beneficial as the GRAs may have a smaller diameter without reducing the torque output of the actuation system. GRAs with a smaller diameter may enable a shallower fairing, or even enable the actuation system to fit within the wing profile, thus providing a lower drag impact. Despite the additional space at the hinge, it can be difficult to drive a larger number of GRAs from one end. By positioning the angle gearbox between two of the plurality of geared mechanical actuators, the number of geared mechanical actuators driven from one end may not be increased.

The actuation system may comprise at least four geared mechanical actuators.

The motor may be disposed within the fixed wing.

The second shaft may be coupled directly to all of the plurality of geared mechanical actuators. Alternatively, the second shaft may be split at the angle gearbox and a first portion of the second shaft may be coupled directly to one or more of the geared mechanical actuators and second portion of the second shaft may be coupled directly to one or more of the geared mechanical actuators.

The angle gearbox may provide a gear reduction.

The actuation system may further comprise a further gearbox coupled between the motor and the angle gearbox, the further gearbox providing a gear reduction.

The actuation system may further comprise a clutch between the motor and the plurality of geared mechanical actuators for mechanically decoupling the motor from the plurality of geared mechanical actuators.

The actuation system may further comprise a brake between the motor and the plurality of geared mechanical actuators for preventing motion of the plurality of geared mechanical actuators.

Preferably, the fixed wing has a leading edge and a trailing edge, and the wing tip device has a leading edge and a trailing edge, and wherein the plurality of geared mechanical actuators are all disposed between the leading and trailing edges of the fixed wing and wing tip device.

Preferably, the fixed wing has a front spar and a rear spar, and the wing tip device has a front spar and a rear spar, and wherein the plurality of geared mechanical actuators are all disposed between the front and rear spars of the fixed wing and wing tip device.

The motor may have an output shaft oriented substantially parallel with the spanwise axis of the fixed wing.

The motor may be arranged within the fixed wing near the maximum thickness location of the wing aerofoil profile.

Each geared mechanical actuator may have a first knuckle fixed to the fixed wing, and a second knuckle fixed to the wing tip device, wherein the first knuckle and the second knuckle are driven to rotate with respect to each other by the geared mechanical actuator using motive force provided by the motor.

Preferably, the fixed wing has an upper surface and a lower surface, and the wing tip device has an upper surface and a lower surface, and the wing tip device is operable between: (i) a fixed flight configuration for use during flight, in which configuration the upper and lower surfaces of the wing tip device are substantially fixed relative to the upper and lower surfaces of the fixed wing; and (ii) a moving flight configuration for use during flight, in which configuration the wing tip device is moved relative to the fixed wing such that at least one of the upper and lower surfaces of the wing tip device is moved away from the respective surface of the fixed wing.

The actuation system may further comprise a restraining assembly operable between a restraining mode in which the wing tip device is held in the fixed flight configuration using a restraining force, and a releasing mode in which the restraining force on the wing tip device is released, such that the wing tip device is able to adopt the moving flight configuration.

The upper and lower surfaces of the wing tip device may be continuous with the upper and lower surfaces of the fixed wing when in the fixed flight configuration.

The wing may be operable in the moving flight configuration for loads alleviation, or when the aircraft speed reaches a threshold just below the static aeroelastic divergence speed of the wing, or when the aircraft is flying at relatively low speed or altitude and a relatively high roll rate is required.

### BRIEF DESCRIPTION OF THE DRAWINGS

Embodiments of the invention will now be described with reference to the accompanying drawings, in which:
Figure 1 shows a plan view of an aircraft with a wing and a forward swept folding wing tip device;
Figure 1b shows the wing tip device of figure 1a in detail;
Figure 2a shows a front view of the aircraft of figure 1a with the wing tip device in various configurations;
Figures 2b, 2c and 2d show the wing tip device of figure 2a in detail;
Figures 3a and 3b show front views of various further configurations of the wing tip device;
Figures 4a and 4b show a comparable actuation system for moving the wing tip device not in accordance with the invention;
Figures 5a and 5b show a first embodiment of an actuation system for moving the wing tip device in accordance with the invention;
Figures 6 to 8 show exploded views of various actuation systems compatible with the invention; and
Figure 9 shows a second embodiment of an actuation system for moving the wing tip device in accordance with the invention.

### DETAILED DESCRIPTION OF EMBODIMENT(S)

Figure la is a plan view of an aircraft 1. The aircraft comprises a central fuselage 3 and two main wings 5 extending outwardly from respective wing roots 5'.

Each wing 5 comprises a fixed wing 7 extending from the root 5' to the tip 7' (shown in close up in Figure lb). At the tip 7' of the fixed wing 7, the wing 5 also comprises a moveable wing tip device 9, in the form of a planar wing tip extension. The wing tip device 9 is rotatably mounted about a hinge 11. This hinge 11 is oriented non-parallel (or 'flared') to the line of flight direction. The hinge 11 may alternatively be parallel to the line of flight direction.

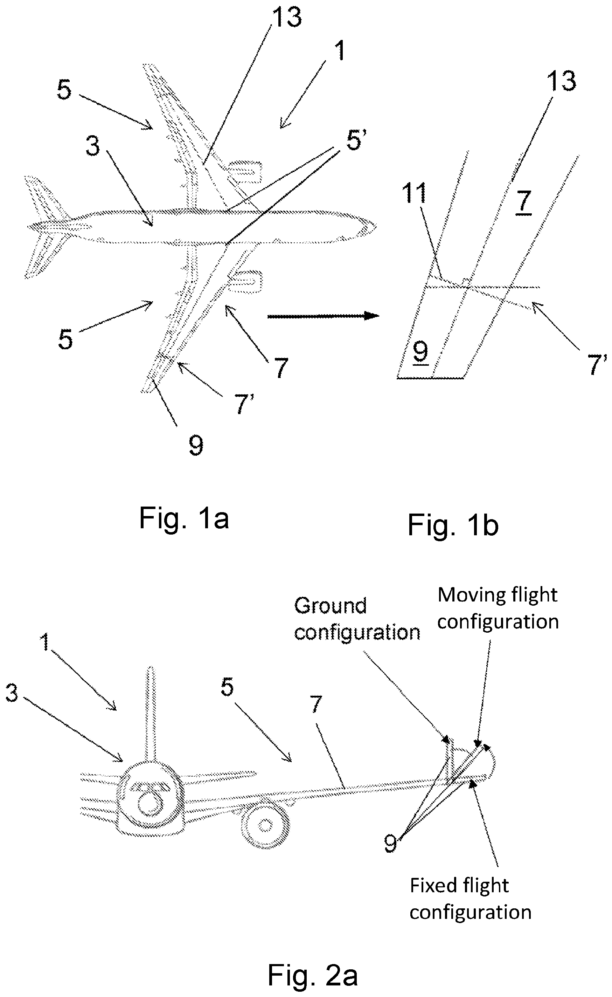

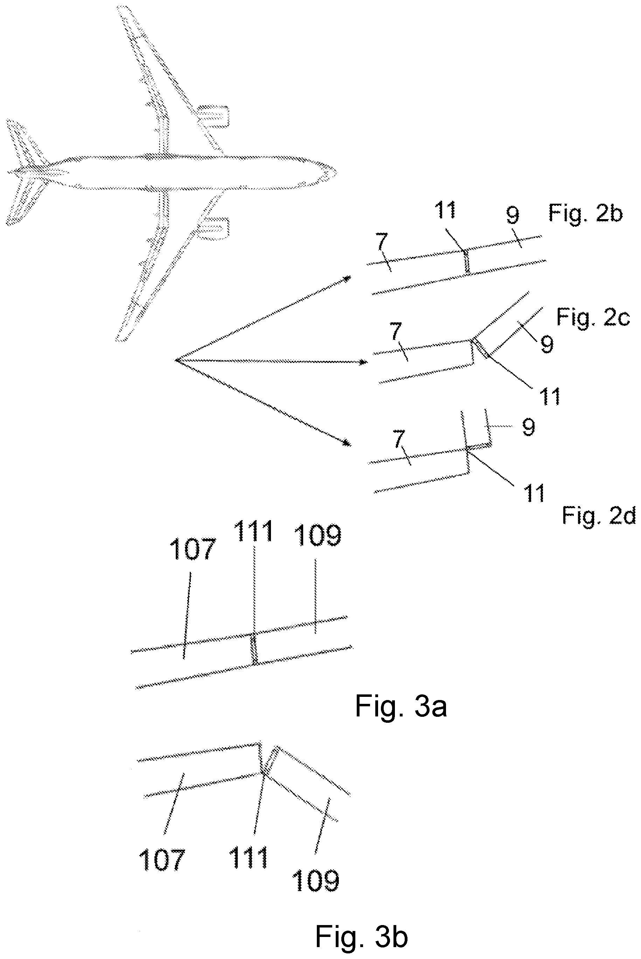

In a fixed flight configuration, the wing tip device 9 is fixed with respect to the fixed wing 7. The wing tip device 9 may be an extension of the fixed wing. Accordingly the upper and lower surfaces of the fixed wing 5 may be continuous with the upper and lower surfaces of the wing tip device 9 (see Figure 2b and the lowermost position in Figure 2a). The leading and trailing edges of the fixed wing 5 may also be continuous with the respective leading and trailing edges of the wing tip device 9 (see Figure la and lb). Such an arrangement is beneficial as it provides a relatively large wing span, thereby providing an aerodynamically efficient aircraft.

However, a large span can result in correspondingly large loads on the wing 5, particularly a large wing root bending moment, especially during high load events such a gusts or extreme manoeuvres. This large wing root bending moment for a relatively large span wing is an issue. The wing 5 must be sized to cope with these maximum loads, which can result in a relatively heavy wing, which may be prohibitive.

The ability of the wing tip device 9 to move substantially freely in a moving flight configuration (see Figures 2a and 2c) seeks to address that problem. In this configuration, the wing tip device 9 is substantially freely rotatable about the hinge 11.

As shown in Figure 2c and the middle position in Figure 2a, the wing tip device 9 is rotatable, upwards, such that the lower surfaces between the fixed wing 7 and the wing tip device 9, are no longer continuous with one another. Furthermore, if the hinge 11 is angled with respect to the streamwise direction (i.e. opposite the line of flight direction F), when the wing tip device 9 rotates upwardly its mean incidence is reduced.

In this moving flight configuration the loads on the wing 5, generated by the wing tip device 9, are significantly reduced. The wing tip device 9 may be released to this configuration during flight (described in more detail below). By providing this load alleviation function during flight, the maximum load the wing needs to be designed for may be reduced, and thus the wing 5 can be made relatively lightweight.

The wing tip device 9 is also configurable to a ground configuration in which the wing tip device 9 is rotated yet further, to a substantially upright position (shown in Figure 2d and the upright position in Figure 2a). The wing tip device is moveable to this configuration when it is on the ground (described in more detail below). Once rotated to such a position, the span of the aircraft 1 is sufficient to meet airport compatibility gate limits. Thus, the aircraft 1 can have a large span (exceeding gate limits) during flight, but is still able to comply with gate limits when on the ground.

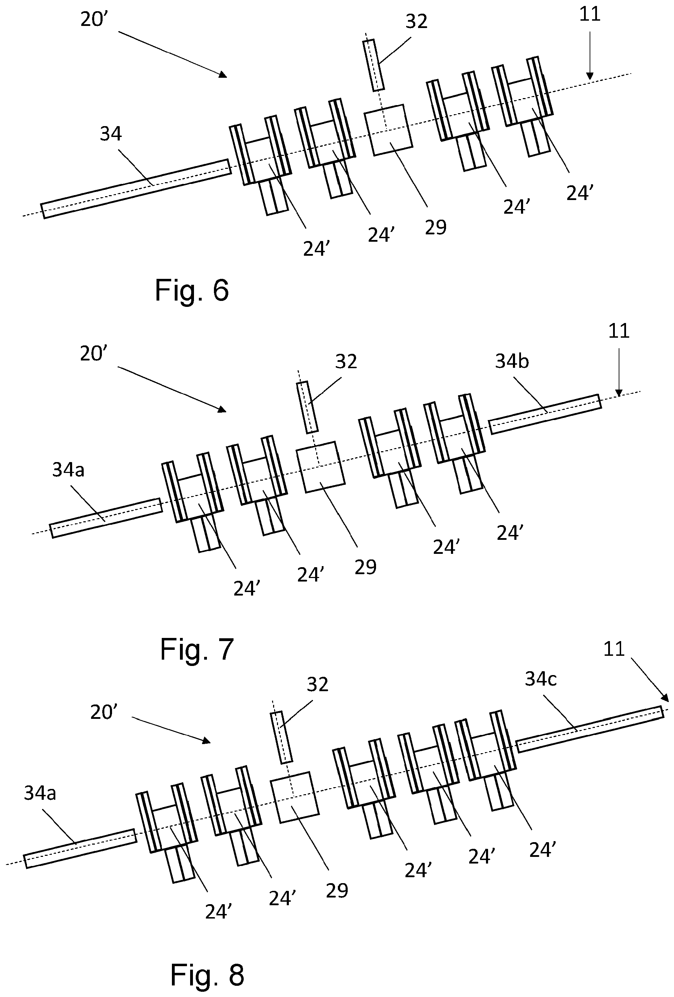

As shown in Figures 3a and 3b, the hinge 111 may be a double hinge for allowing both upward and downward rotation of the wing tip device 109 in the moving flight configuration (only the downward rotation being illustrated in figure 6b, and the upward rotation being as per Figure 2c). Such an arrangement enables both positive-g and negative-g loads to be alleviated. The additional functionality of hinge 111 may be combined with the hinge 11 described above.

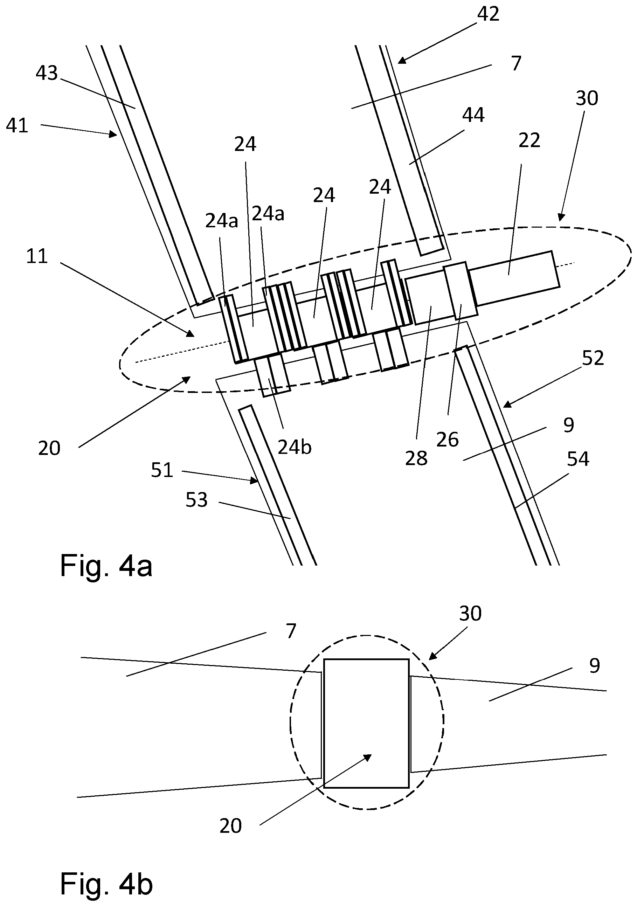

Figures 4a and 4b show a comparative example of an actuation system 20 for rotating the wing tip device 9 about the hinge 11. The actuation system comprises a motor 22, a plurality of geared mechanical actuators 24, and a gearbox 26. The motor 22 may form part of a power drive unit (PDU) incorporating a brake, or a separate brake may be provided. The geared mechanical actuator is a rotary actuator arranged to convert a first rotary motion into a different second rotary motion, e.g. at a different rate of angular rotation and/or torque and/or direction.

In the illustrated comparative example there are 3 geared rotary actuator (GRA) 'slices'. The three GRAs are driven off a common shaft coupled via gearbox 26, which is a pre-stage reduction gearbox. The motor 22 (or PDU) is arranged at one end of the three GRA slices. The GRAs 24 are each arranged on the hinge line of hinge 11.

The GRAs 24 each have a first knuckle 24a (or pair of first knuckles) coupled to the fixed wing 7 and a second knuckle 24b (or pair of second knuckles) coupled to the wing tip device 9. Each of the GRAs 24 is substantially identical. When the motor 22 is activated to drive the common drive shaft (not visible) via the gearbox 26, the second knuckles 24b rotate relative to the first knuckles 24a of the GRAs 24. This drives the articulation of the wing tip device 9 relative to the fixed wing about the hinge 11. The rotation may be a positive or negative rotation.

A clutch 28 is provided between the gearbox 26 and the GRAs 24. Engaging the clutch enables the motor 22 to drive the GRAs 24. When the brake (of the PDU) is engaged and the clutch 28 is also engaged, the brake acts to prevent rotation of the wing tip device 9 relative to the fixed wing about the hinge 11.

Disengaging the clutch enables the GRAs 24 to substantially freely rotate, thereby allowing substantially free rotation of the wing tip device 9 relative to the fixed wing about the hinge 11 when in the moving flight configuration.

The wing tip device may be entirely passively actuated in the moving flight configuration once the brake and clutch are released. For example the wing tip device may be moved under the action of aerodynamic forces and/or gravity. The option to brake or release the wing tip device may be referred to as a "semi-aeroelastic" arrangement.

Figure 4a shows a schematic plan view of the actuation system 20 and the wing tip device 9 and fixed wing 7, and Figure 4b shows a schematic front view of the same. As can be seen, a representative fairing 30 is shown in dashed line which is sized to accommodate the actuation system 20. The fairing 30 extends significantly above the upper wing surface, below the lower wing surface, forward of the wing leading edge and aft of the wing trailing edge. The fairing 30 in the comparative example of figures 4a and 4b has a relatively large drag impact.

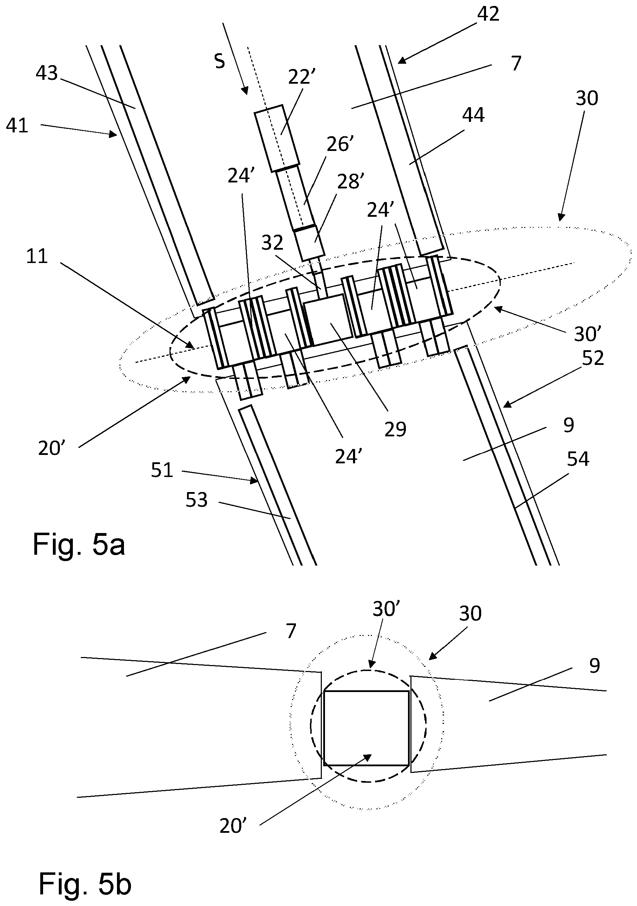

Figures 5a and 5b show a first embodiment of an actuation system 20' for rotating the wing tip device 9 about the hinge 11. The actuation system 20' is substantially identical in function to the actuation system 20 described above in the comparative example, and like reference numerals are used to denote like parts. Like reference numerals with a prime (') are used to denote similar parts with the comparative example which differ in their size and/or position but share basically their same function as described above.

The actuation system 20' comprises a motor 22', a plurality of geared mechanical actuators 24', and a gearbox 26'. The motor 22' may form part of a power drive unit (PDU) incorporating a brake, or a separate brake may be provided.

In the actuation system 20' there are four geared rotary actuator (GRA) 'slices', each arranged on the hinge line of hinge 11. The four GRAs are driven via gearbox 26', which is a pre-stage reduction gearbox. The GRAs 24'are substantially identical to the GRAs 24 described above in their functionality but have a smaller diameter than the GRAs 24. The torque output of the four GRAs 24' may be substantially the same as the torque output of the three GRAs 24, so the ability of the actuation system 20' to rotate the wing tip device 9 relative to the fixed wing about the hinge 11 may be substantially the same as for the actuation system 20. This enables the actuation system to drive the wing tip device 9 from the moving flight configuration, or the ground configuration, to the fixed flight configuration.

Importantly, the actuation system 20' differs from the actuation system 20 in that there is an additional angle gearbox 29 coupled between the plurality of GRAs 24' and the motor 22'. The angle gearbox 29 has an input shaft 32 extending away from the hinge 11 towards the motor 22'. The angle gearbox 29 is arranged along the hinge line of hinge 11. The angle gearbox 29 enables the motor 22' to be located away from the hinge 11.

Increasing the number of GRA slices 24' from three to four, enables the size (diameter) of each GRA slice 24' to be smaller than the GRA slices 24 of the comparative example. As can be seen in Figure 5b, this has the effect of reducing the overall height of the actuation system 20' at the hinge 11, enabling the size of a fairing 30' to be smaller in the height dimension than the comparative fairing 30 (shown in feint dashed line in figure 5b). This enables the actuation system 20' and associated fairing 30' to have a lower frontal profile area, which may aid drag reduction.

Increasing the number of GRA slices 24' from three to four also occupies more of the chord length between the leading and trailing edges of the wing at the hinge 11, which is the opposite of the intention to reduce drag. Additionally, driving all four GRA slices 24' on a common shaft from one end would likely introduce mechanical inefficiency and a higher mechanical resistance in the actuation system between the motor and the GRAs. The angle gearbox 29 solves both these problems.

The angle gearbox 29 is arranged along the hinge line of hinge 11 and between two of the GRAs 24'. Consequently, the motor 22' may be located in the fixed wing 7 away from the hinge 11, and the GRAs 24' are separated into a forward pair of the GRAs 24' in front of the angle gearbox 29 and a rearward pair of GRAs 24' aft of the angle gearbox 29 in the direction of the hinge 11. Therefore, the potential mechanical inefficiency of driving all four GRAs24' from one end is avoided.

As well as the motor 22' and brake (or PDU), the gearbox 26' and clutch 28' may be located within the fixed wing 7. Therefore, the length of the overall actuation system 20' at the hinge may be reduced compared to the actuation system 20.

The angle gearbox 29 may be a reduction gearbox. With a reduction angular gearbox 29, the amount of gear reduction required in the pre-stage gearbox 26' is reduced. Therefore, the size (diameter) of the gearbox 26' can also be reduced. This helps with fitting the pre-stage gearbox 26' within the profile of the fixed wing 7. The gearbox 26' may be oriented with its length dimension substantially in the wing spanwise direction, S. The gearbox 26' can also trade length for diameter, to help with fitting the pre-stage gearbox 26' within the profile of the fixed wing 7.

The clutch 28' may be sized with the loads transferred from the motor 22' when driving the wing tip device 9. Due to the gear ratio of the reduction angular gearbox 29 between the GRAs 24' and the clutch 28', the clutch 28' may be significantly smaller than the clutch 28 which acts directly on the GRAs 24. The smaller clutch 28' helps with fitting the clutch 28' within the profile of the fixed wing 7. The clutch 28' may be oriented with its length dimension substantially in the wing spanwise direction.

The smaller clutch 28' and smaller pre-stage gearbox 26' may be lighter than the clutch 28 and gearbox 26, which will have a benefit at aircraft level, and may also reduce the local dynamic loads.

The motor 22' and brake (or PDU) may be only slightly smaller than the corresponding parts in the actuation system 20.

Since the clutch 28', pre-stage gearbox 26' and motor 22' (or PDU) are no longer cantilevered off the trailing edge of the GRAs at the hinge, the length of the actuation system 20' at the hinge 11 is reduced, enabling the size of a fairing 30' to be smaller in the length (chordwise) dimension than the comparative fairing 30 (shown in feint dashed line in figure 5a). This enables the actuation system 20' and associated fairing 30' to have a lower profile area, which may aid drag reduction.

Also, since the clutch 28', pre-stage gearbox 26' and motor 22' (or PDU) are no longer cantilevered off the trailing edge of the GRAs at the hinge, the risk of unfavourable vibration at the hinge may also be lower.

The clutch 28', pre-stage gearbox 26' and motor 22' (or PDU) will pass through the wingbox ribs which may require a reduced space for fuel tank volume. This potential disadvantage is a trade off for the lower drag of the smaller size of the actuation system 20' and fairing 30'.

Disengaging the clutch 28' enables the GRAs 24' to substantially freely rotate, thereby allowing substantially free rotation of the wing tip device 9 relative to the fixed wing about the hinge 11 when in the moving flight configuration.

Engaging the clutch 28' enables the motor 22' to drive the GRAs 24'. When the brake (of the PDU) is engaged and the clutch 28' is also engaged, the brake acts to prevent rotation of the wing tip device 9 relative to the fixed wing about the hinge 11 in the fixed flight configuration.

Depending on the relative flare angle of the hinge 11 to the wing spanwise direction S, the input shaft 32 of the angle gearbox 29 may have a kink, as shown in Figure 5a. The kink may be provided by a CV joint or similar.

Figure 6 shows an exploded view of some components of the actuation system 20' located on the hinge 11 according to a first arrangement compatible with the embodiment of figures 5a and 5b. The actuation system 20' has the four GRAs 24' driven off a common output shaft 34 of the angle gearbox 29. A first pair of the GRAs 24' are on one side of the angle gearbox 29 and second pair of the GRAs 24' are on the opposite side of the angle gearbox 29 along the hinge 11. The common output shaft 34 extends through each of the four GRAs 24' and through the angle gearbox 29. The input shaft 32 has an axis extending approximately 90 degrees to the common output shaft 34 axis. The angle gearbox 29 may comprise engaging bevel gears or similar coupling the input and output shafts in geared rotation. The angle the input shaft makes with the output shaft may be between 70 and 90 degrees.

Figure 7 shows an alternative exploded view of some components of the actuation system 20' located on the hinge 11 according to a second arrangement compatible with the embodiment of figures 5a and 5b. The actuation system 20' has the four GRAs 24' driven off a split output shaft comprising a first output shaft portion 34a, and a second output shaft portion 34b of the angle gearbox 29. A first pair of the GRAs 24' are on one side of the angle gearbox 29 and second pair of the GRAs 24' are on the opposite side of the angle gearbox 29 along the hinge 11. The first output shaft portion 34a extends through the first pair of GRAs 24' and into (but not through) the angle gearbox 29. The second output shaft portion 34b extends through the second pair of GRAs 24' and into (but not through) the angle gearbox 29. The input shaft 32 has an axis extending approximately 90 degrees to the split output shaft axis. The angle gearbox 29 may comprise engaging bevel gears or similar coupling the input shaft and the output shaft portions in geared rotation. The angle the input shaft makes with the output shaft may be between 70 and 90 degrees.

Figure 8 shows a yet further alternative exploded view of some components of an actuation system 20' located on the hinge 11 according to a third arrangement. The actuation system 20' is similar in most respects to that of the first and second arrangements above but comprises five GRAs 24' instead of four and the angle gearbox 29 is located between a forward pair of the GRAs 24' and a rear trio of the GRAs 24'. Consequently, the split output shaft has a first shaft portion 34a and a longer second shaft portion 34c. The GRAs 24', the angle gearbox 29 and the shafts may have a different size but their arrangement and function are substantially the same as described above and are compatible with the embodiment of figures 5a and 5b.

It will be appreciated, that in further alternative variants the number of GRAs 24' may be increased above five in the actuation system.

Since the input shaft 32 is located further forward along the hinge 11, the motor 22' may be positioned further forward in the fixed wing 7 which may beneficially be arranged within the fixed wing near the maximum thickness location of the wing aerofoil profile to more easily accommodate the motor 22', gearbox 26' and clutch 28'. This may affect the trade of diameter and length of those components, which may result in a shorter length but larger diameter without impacting the wing profile. The shorter length of at least some of those components may have a reduced negative impact on the fuel volume of the wing, highlighted above.

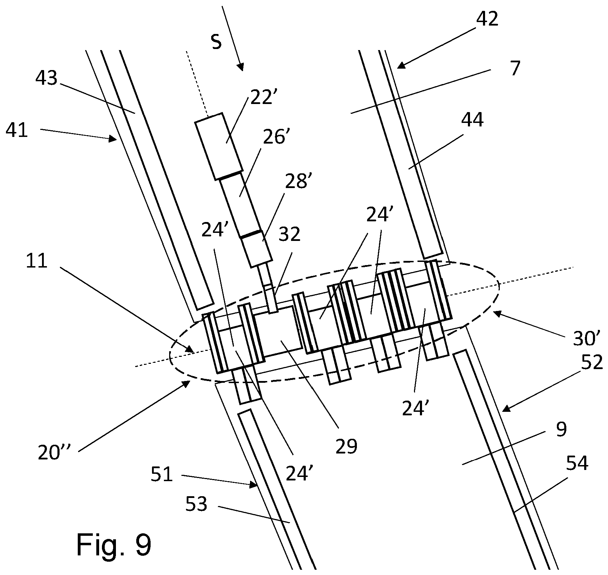

Figure 9 shows a second embodiment of an actuation system 20" for rotating the wing tip device 9 about the hinge 11. The actuation system 20" is substantially identical in function to the actuation system 20' described above in the first embodiment, and like reference numerals are used to denote like parts. Like reference numerals with a double prime (") are used to denote similar parts with the first embodiment which differ in their size and/or position but share basically their same function as described above.

The actuation system 20" differs from the actuation system 20' in that the angle gearbox 29 is located between a forward one of the GRAs 24' and a rear trio of the GRAs 34' on the hinge 11. Consequently, the input shaft 32, the motor 22' (and brake or PDU), the gearbox 26' and the clutch 28' are all relatively further forward towards the leading edge of the fixed wing 7. In all other respects, the actuation system 20" is identical to the actuation system 20'. The size of the actuation system at the hinge 11 is unaffected compared to the first embodiment of figures 5a and 5b and therefore so is the fairing 30', retaining all the previously described advantages.

Similar to the variant shown in Figure 8, the second embodiment of figure 9 further benefits in that the since the input shaft 32 is located further forward along the hinge 11, the motor 22' may be positioned further forward in the fixed wing 7 which may beneficially be arranged within the fixed wing near the maximum thickness location of the wing aerofoil profile to more easily accommodate the motor 22', gearbox 26' and clutch 28'. This may affect the trade of diameter and length of those components, which may result in a shorter length but larger diameter without impacting the wing profile. The shorter length of at least some of those components may have a reduced negative impact on the fuel volume of the wing, highlighted above.

The actuation system 20" may have the common output shaft 34 similar to the first arrangement of figure 5, or may have a split output shaft similar to the second or third arrangements of figures 7 and 8.

In the above described embodiments and examples, the fixed wing 7 has a leading edge 41 and a trailing edge 42, and the wing tip device 9 has a leading edge 51 and a trailing edge 52, and the GRAs 24' are all disposed between the leading and trailing edges of the fixed wing and wing tip device. This ensures the length of the fairing 30' is minimised.

In the above above described embodiments and examples, the fixed wing 7 has a front spar 43 and a rear spar 44, and the wing tip device 9 has a front spar 53 and a rear spar 54, and the GRAs 24' are all disposed between the front and rear spars of the fixed wing and wing tip device. This ensures the loads into the fixed wing and wing tip device from the GRAs are managed without additional structure forward of the front spars or rearward of the rear spars.

In the above described embodiments and examples, the wing tip device is operable between: (i) a fixed flight configuration for use during flight, in which configuration the upper and lower surfaces of the wing tip device are substantially fixed relative to the upper and lower surfaces of the fixed wing; and (ii) a moving flight configuration for use during flight, in which configuration the wing tip device is moved relative to the fixed wing such that at least one of the upper and lower surfaces of the wing tip device is moved away from the respective surface of the fixed wing.

In the above described embodiments and examples, the brake and clutch may form part of a restraining assembly of the actuation system, operable between a restraining mode in which the wing tip device is held in the fixed flight configuration using a restraining force, and a releasing mode in which the restraining force on the wing tip device is released, such that the wing tip device is able to adopt the moving flight configuration.

In the above described embodiments and examples, the upper and lower surfaces of the wing tip device may be continuous with the upper and lower surfaces of the fixed wing when in the fixed flight configuration.

In the above described embodiments and examples, the wing may be operable in the moving flight configuration for loads alleviation, or when the aircraft speed reaches a threshold just below the static aeroelastic divergence speed of the wing, or when the aircraft is flying at relatively low speed or altitude and a relatively high roll rate is required.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made within the scope of the invention as defined in the appended claims.

## Claims

1. An aircraft wing (5) comprising a fixed wing (7) with a tip (7'), and a wing tip device (9) rotatably mounted on a hinge (11) at the tip of the fixed wing, such that the wing tip device is rotatable about the hinge, and an actuation system (20) for rotating the wing tip device about the hinge, wherein the actuation system comprises a motor (22), a plurality of geared mechanical actuators (24), and an angle gearbox (29) coupled between the plurality of geared mechanical actuators and the motor, each geared mechanical actuator is driveable by the motor and arranged to convert rotary motion into a different rotary motion, each geared mechanical actuator is arranged along a hinge line of the hinge, wherein the angle gearbox is arranged along the hinge line and between two of the plurality of geared mechanical actuators,
and wherein the angle gearbox is connected via a first shaft rotatable about a first shaft axis oriented towards the motor, and a second shaft rotatable about a second shaft axis oriented along the hinge line,
**characterized by** the first shaft axis forming an angle of between 70 and 90 degrees with the second shaft axis.

2. An aircraft wing (5) according to claim 1, wherein the actuation system (20) comprises at least four geared mechanical actuators (24).

3. An aircraft wing (5) according to claim 1 or claim 2, wherein the motor (22) is disposed within the fixed wing (7).

4. An aircraft wing (5) according to any preceding claim, wherein the second shaft is coupled directly to all of the plurality of geared mechanical actuators (24), or wherein the second shaft is split at the angle gearbox (29) and a first portion of the second shaft is coupled directly to one or more of the geared mechanical actuators and second portion of the second shaft is coupled directly to one or more of the geared mechanical actuators.

5. An aircraft wing (5) according to any preceding claim, wherein the angle gearbox (29) provides a gear reduction.

6. An aircraft wing (5) according to any preceding claim, wherein the actuation system (20) further comprises a further gearbox coupled between the motor (22) and the angle gearbox (29), the further gearbox providing a gear reduction.

7. An aircraft wing (5) according to any preceding claim, wherein the actuation system (20) further comprises a clutch (28) between the motor (22) and the plurality of geared mechanical actuators (24) for mechanically decoupling the motor from the plurality of geared mechanical actuators.

8. An aircraft wing (5) according to any preceding claim, wherein the actuation system (20) further comprises a brake between the motor (22) and the plurality of geared mechanical actuators (24) for preventing motion of the plurality of geared mechanical actuators.

9. An aircraft wing (5) according to any preceding claim, wherein the fixed wing (7) has a leading edge (41) and a trailing edge (42), and the wing tip device (9) has a leading edge (51) and a trailing edge (52), and wherein the plurality of geared mechanical actuators (24) are all disposed between the leading and trailing edges of the fixed wing and wing tip device.

10. An aircraft wing (5) according to any preceding claim, wherein the fixed wing (7) has a front spar (43) and a rear spar (44), and the wing tip device (9) has a front spar (53) and a rear spar (54), and wherein the plurality of geared mechanical actuators (24) are all disposed between the front and rear spars of the fixed wing and wing tip device.

11. An aircraft wing (5) according to any preceding claim, wherein the motor (22) has an output shaft oriented substantially parallel with the spanwise axis of the fixed wing (7) and/or wherein the motor (22) is arranged within the fixed wing (7) near the maximum thickness location of the wing aerofoil profile.

12. An aircraft wing (5) according to any preceding claim, wherein each geared mechanical actuator (24) has a first knuckle (24a) fixed to the fixed wing (7), and a second knuckle (24b) fixed to the wing tip device (9), wherein the first knuckle and the second knuckle are driven to rotate with respect to each other by the geared mechanical actuator using motive force provided by the motor (22).

13. An aircraft wing (5) according to any preceding claim, wherein the fixed wing (7) has an upper surface and a lower surface, and the wing tip device (9) has an upper surface and a lower surface, and the wing tip device is operable between: (i) a fixed flight configuration for use during flight, in which configuration the upper and lower surfaces of the wing tip device are substantially fixed relative to the upper and lower surfaces of the fixed wing; and (ii) a moving flight configuration for use during flight, in which configuration the wing tip device is moved relative to the fixed wing such that at least one of the upper and lower surfaces of the wing tip device is moved away from the respective surface of the fixed wing, optionally wherein the actuation system (20) further comprises a restraining assembly operable between a restraining mode in which the wing tip device (9) is held in the fixed flight configuration using a restraining force, and a releasing mode in which the restraining force on the wing tip device is released, such that the wing tip device is able to adopt the moving flight configuration.

14. An aircraft wing (5) according to claim 13, wherein the upper and lower surfaces of the wing tip device (9) are continuous with the upper and lower surfaces of the fixed wing (7) when in the fixed flight configuration.

15. An aircraft wing (5) according to claim 13 or 14, wherein the wing is operable in the moving flight configuration for loads alleviation, or when the aircraft speed reaches a threshold just below the static aeroelastic divergence speed of the wing, or when the aircraft is flying at relatively low speed or altitude and a relatively high roll rate is required.

## Patentansprüche

1. Flugzeugflügel (5), umfassend einen fixierten Flügel (7) mit einer Spitze (7') und eine Flügelspitzenvorrichtung (9), die drehbar an einem Scharnier (11) an der Spitze des fixierten Flügels montiert ist, sodass die Flügelspitzenvorrichtung um das Scharnier drehbar ist, und ein Betätigungssystem (20) zum Drehen der Flügelspitzenvorrichtung um das Scharnier, wobei das Betätigungssystem einen Motor (22), eine Vielzahl von mechanischen Getriebeaktuatoren (24) und ein Winkelgetriebe (29) umfasst, das zwischen der Vielzahl von mechanischen Getriebeaktuatoren und dem Motor gekoppelt ist, wobei jeder mechanische Getriebeaktuator vom Motor antreibbar und angeordnet ist, um eine Drehbewegung in eine andere Drehbewegung zu konvertieren, wobei jeder mechanische Getriebeaktuator entlang einer Scharnierlinie des Scharniers angeordnet ist, wobei das Winkelgetriebe entlang der Scharnierlinie und zwischen zwei der Vielzahl von mechanischen Getriebeaktuatoren angeordnet ist und wobei das Winkelgetriebe über eine erste Welle, drehbar um eine erste Wellenachse, orientiert in Richtung des Motors, und eine zweite Welle, drehbar um eine zweite Wellenachse, orientiert entlang der Scharnierlinie, verbunden ist, **dadurch gekennzeichnet, dass** die erste Wellenachse mit der zweiten Wellenachse einen Winkel zwischen 70 und 90 Grad bildet.

2. Flugzeugflügel (5) nach Anspruch 1, wobei das Betätigungssystem (20) mindestens vier mechanische Getriebeaktuatoren (24) umfasst.

3. Flugzeugflügel (5) nach Anspruch 1 oder Anspruch 2, wobei der Motor (22) innerhalb des fixierten Flügels (7) angeordnet ist.

4. Flugzeugflügel (5) nach einem vorstehenden Anspruch, wobei die zweite Welle direkt mit allen der Vielzahl der mechanischen Getriebeaktuatoren (24) gekoppelt ist, oder wobei die zweite Welle am Winkelgetriebe (29) geteilt ist und ein erster Abschnitt der zweiten Welle direkt mit einem oder mehreren der mechanischen Getriebeaktuatoren gekoppelt ist und ein zweiter Abschnitt der zweiten Welle direkt mit einem oder mehreren der mechanischen Getriebeaktuatoren gekoppelt ist.

5. Flugzeugflügel (5) nach einem vorstehenden Anspruch, wobei das Winkelgetriebe (29) eine Getriebeuntersetzung bereitstellt.

6. Flugzeugflügel (5) nach einem vorstehenden Anspruch, wobei das Betätigungssystem (20) weiter ein weiteres Getriebe umfasst, das zwischen dem Motor (22) und dem Winkelgetriebe (29) gekoppelt ist, wobei das weitere Getriebe eine Getriebeuntersetzung bereitstellt.

7. Flugzeugflügel (5) nach einem vorstehenden Anspruch, wobei das Betätigungssystem (20) weiter eine Kupplung (28) zwischen dem Motor (22) und der Vielzahl von mechanischen Getriebeaktuatoren (24) umfasst, um den Motor mechanisch von der Vielzahl von mechanischen Getriebeaktuatoren zu entkoppeln.

8. Flugzeugflügel (5) nach einem vorstehenden Anspruch, wobei das Betätigungssystem (20) weiter eine Bremse zwischen dem Motor (22) und der Vielzahl von mechanischen Getriebeaktuatoren (24) umfasst, um eine Bewegung der Vielzahl von mechanischen Getriebeaktuatoren zu verhindern.

9. Flugzeugflügel (5) nach einem vorstehenden Anspruch, wobei der fixierte Flügel (7) eine Vorderkante (41) und eine Hinterkante (42) aufweist, und die Flügelspitzenvorrichtung (9) eine Vorderkante (51) und eine Hinterkante (52) aufweist, und wobei die Vielzahl von mechanischen Getriebeaktuatoren (24) alle zwischen der Vorder- und Hinterkante des fixierten Flügels und der Flügelspitzenvorrichtung angeordnet sind.

10. Flugzeugflügel (5) nach einem vorstehenden Anspruch, wobei der fixierte Flügel (7) einen vorderen Holm (43) und einen hinteren Holm (44) aufweist, und die Flügelspitzenvorrichtung (9) einen vorderen Holm (53) und einen hinteren Holm (54) aufweist, und wobei die Vielzahl von mechanischen Getriebeaktuatoren (24) alle zwischen dem vorderen und dem hinteren Holm des fixierten Flügels und der Flügelspitzenvorrichtung angeordnet sind.

11. Flugzeugflügel (5) nach einem vorstehenden Anspruch, wobei der Motor (22) eine Ausgabewelle aufweist, die im Wesentlichen parallel zur Spannweitenachse des fixierten Flügels (7) orientiert ist, und/oder wobei der Motor (22) innerhalb des fixierten Flügels (7) nahe dem Standort der maximalen Dicke des Flügeltragflächenprofiles angeordnet ist.

12. Flugzeugflügel (5) nach einem vorstehenden Anspruch, wobei jeder mechanische Getriebeaktuator (24) einen ersten Achsschenkel (24a), der am fixierten Flügel (7) fixiert ist, und einen zweiten Achsschenkel (24b), der an der Flügelspitzenvorrichtung (9) fixiert ist, aufweist, wobei der erste Achsschenkel und der zweite Achsschenkel angetrieben werden, um in Bezug aufeinander durch den mechanischen Getriebeaktuator unter Verwendung der vom Motor (22) bereitgestellten Bewegungskraft gedreht zu werden.

13. Flugzeugflügel (5) nach einem vorstehenden Anspruch, wobei der fixierte Flügel (7) eine obere Oberfläche und eine untere Oberfläche aufweist und die Flügelspitzenvorrichtung (9) eine obere Oberfläche und eine untere Oberfläche aufweist, und die Flügelspitzenvorrichtung zwischen folgendem betreibbar ist: (i) einer fixierten Flugkonfiguration zur Verwendung während des Fluges, in der die obere und untere Oberfläche der Flügelspitzenvorrichtung im Wesentlichen relativ zur oberen und unteren Oberfläche des fixierten Flügels fixiert sind; und (ii) einer beweglichen Flugkonfiguration zur Verwendung während des Fluges, in der die Flügelspitzenvorrichtung relativ zum fixierten Flügel so bewegt wird, dass mindestens eine der oberen und unteren Oberfläche der Flügelspitzenvorrichtung von der jeweiligen Oberfläche des fixierten Flügels wegbewegt wird, optional, wobei das Betätigungssystem (20) weiter eine Rückhaltevorrichtung umfasst, die zwischen einem Rückhaltemodus, in dem die Flügelspitzenvorrichtung (9) unter Verwendung einer Rückhaltekraft in der fixierten Flugkonfiguration gehalten wird, und einem Freigabemodus, in dem die Rückhaltekraft auf die Flügelspitzenvorrichtung freigegeben wird, betrieben werden kann, so dass die Flügelspitzenvorrichtung in der Lage ist, die bewegliche Flugkonfiguration einzunehmen.

14. Flugzeugflügel (5) nach Anspruch 13, wobei die oberen und unteren Oberflächen der Flügelspitzenvorrichtung (9) durchgehend mit der oberen und unteren Oberfläche des fixierten Flügels (7) sind, wenn in der fixierten Flugkonfiguration.

15. Flugzeugflügel (5) nach Anspruch 13 oder 14, wobei der Flügel in der beweglichen Flugkonfiguration zur Lastentlastung betreibbar ist oder wenn die Flugzeuggeschwindigkeit einen Schwellenwert knapp unterhalb der statischen aeroelastischen Divergenzgeschwindigkeit des Flügels erreicht oder wenn das Flugzeug mit relativ geringer Geschwindigkeit oder in relativ geringer Höhe fliegt und eine relativ hohe Rollrate erforderlich ist.

## Revendications

1. Aile (5) d'aéronef comprenant une aile fixe (7) avec une extrémité (7'), et un dispositif (9) d'extrémité d'aile monté de manière rotative sur une charnière (11) au niveau de l'extrémité de l'aile fixe, de telle sorte que le dispositif d'extrémité d'aile soit rotatif autour de la charnière, et un système d'actionnement (20) pour faire tourner le dispositif d'extrémité d'aile autour de la charnière, dans laquelle le système d'actionnement comprend un moteur (22), une pluralité d'actionneurs mécaniques (24) à engrenage, et un renvoi d'angle (29) couplé entre la pluralité d'actionneurs mécaniques à engrenage et le moteur, chaque actionneur mécanique à engrenage peut être entraîné par le moteur et est agencé pour convertir un mouvement rotatif en un mouvement rotatif différent, chaque actionneur mécanique à engrenage est agencé le long d'une ligne de charnière de la charnière, dans laquelle le renvoi d'angle est agencé le long de la ligne de charnière et entre deux de la pluralité d'actionneurs mécaniques à engrenage, et dans laquelle le renvoi d'angle est relié par l'intermédiaire d'un premier arbre rotatif autour d'un premier axe d'arbre orienté vers le moteur, et d'un deuxième arbre rotatif autour d'un deuxième axe d'arbre orienté le long de la ligne de charnière, **caractérisée en ce que** le premier axe d'arbre forme un angle compris entre 70 et 90 degrés avec le deuxième axe d'arbre.

2. Aile (5) d'aéronef selon la revendication 1, dans laquelle le système d'actionnement (20) comprend au moins quatre actionneurs mécaniques (24) à engrenage.

3. Aile (5) d'aéronef selon la revendication 1 ou la revendication 2, dans laquelle le moteur (22) est disposé à l'intérieur de l'aile fixe (7).

4. Aile (5) d'aéronef selon une quelconque revendication précédente, dans laquelle le deuxième arbre est couplé directement à l'intégralité de la pluralité d'actionneurs mécaniques (24) à engrenage, ou dans laquelle le deuxième arbre est divisé au niveau du renvoi d'angle (29) et une première partie du deuxième arbre est couplée directement à un ou plusieurs des actionneurs mécaniques à engrenage et une deuxième partie du deuxième arbre est couplée directement à un ou plusieurs des actionneurs mécaniques à engrenage.

5. Aile (5) d'aéronef selon une quelconque revendication précédente, dans laquelle le renvoi d'angle (29) fournit une réduction d'engrenage.

6. Aile (5) d'aéronef selon une quelconque revendication précédente, dans laquelle le système d'actionnement (20) comprend en outre une autre boîte à engrenages couplée entre le moteur (22) et le renvoi d'angle (29), l'autre boîte à engrenages fournissant une réduction d'engrenage.

7. Aile (5) d'aéronef selon une quelconque revendication précédente, dans laquelle le système d'actionnement (20) comprend en outre un embrayage (28) entre le moteur (22) et la pluralité d'actionneurs mécaniques (24) à engrenage pour découpler mécaniquement le moteur de la pluralité d'actionneurs mécaniques à engrenage.

8. Aile (5) d'aéronef selon une quelconque revendication précédente, dans laquelle le système d'actionnement (20) comprend en outre un frein entre le moteur (22) et la pluralité d'actionneurs mécaniques (24) à engrenage pour empêcher le mouvement de la pluralité d'actionneurs mécaniques à engrenage.

9. Aile (5) d'aéronef selon une quelconque revendication précédente, dans laquelle l'aile fixe (7) présente un bord d'attaque (41) et un bord de fuite (42), et le dispositif (9) d'extrémité d'aile présente un bord d'attaque (51) et un bord de fuite (52), et dans laquelle la pluralité d'actionneurs mécaniques (24) à engrenage sont tous disposés entre les bords d'attaque et de fuite de l'aile fixe et du dispositif d'extrémité d'aile.

10. Aile (5) d'aéronef selon une quelconque revendication précédente, dans laquelle l'aile fixe (7) présente un longeron avant (43) et un longeron arrière (44), et le dispositif (9) d'extrémité d'aile présente un longeron avant (53) et un longeron arrière (54), et dans laquelle la pluralité d'actionneurs mécaniques (24) à engrenage sont tous disposés entre les longerons avant et arrière de l'aile fixe et du dispositif d'extrémité d'aile.

11. Aile (5) d'aéronef selon une quelconque revendication précédente, dans laquelle le moteur (22) présente un arbre de sortie orienté sensiblement parallèlement à l'axe d'envergure de l'aile fixe (7) et/ou dans laquelle le moteur (22) est agencé à l'intérieur de l'aile fixe (7) près de l'emplacement d'épaisseur maximale du profil aérodynamique de l'aile.

12. Aile (5) d'aéronef selon une quelconque revendication précédente, dans laquelle chaque actionneur mécanique (24) à engrenage présente une première fourche (24a) fixée à l'aile fixe (7), et une deuxième fourche (24b) fixée au dispositif (9) d'extrémité d'aile, dans laquelle la première fourche et la deuxième fourche sont entraînées pour tourner l'une par rapport à l'autre par l'actionneur mécanique à engrenage utilisant une force motrice fournie par le moteur (22).

13. Aile (5) d'aéronef selon une quelconque revendication précédente, dans laquelle l'aile fixe (7) présente une surface supérieure et une surface inférieure, et le dispositif (9) d'extrémité d'aile présente une surface supérieure et une surface inférieure, et le dispositif d'extrémité d'aile est apte à fonctionner entre : (i) une configuration de vol fixe pour une utilisation pendant le vol, dans laquelle configuration les surfaces supérieure et inférieure du dispositif d'extrémité d'aile sont sensiblement fixes par rapport aux surfaces supérieure et inférieure de l'aile fixe ; et (ii) une configuration de vol mobile pour une utilisation pendant le vol, dans laquelle configuration le dispositif d'extrémité d'aile est déplacé par rapport à l'aile fixe de telle sorte qu'au moins une des surfaces supérieure et inférieure du dispositif d'extrémité d'aile soit éloignée de la surface respective de l'aile fixe, facultativement dans laquelle le système d'actionnement (20) comprend en outre un ensemble de retenue apte à fonctionner entre un mode de retenue dans lequel le dispositif (9) d'extrémité d'aile est maintenu dans la configuration de vol fixe en utilisant une force de retenue, et un mode de libération dans lequel la force de retenue sur le dispositif d'extrémité d'aile est libérée, de telle sorte que le dispositif d'extrémité d'aile soit capable d'adopter la configuration de vol mobile.

14. Aile (5) d'aéronef selon la revendication 13, dans laquelle les surfaces supérieure et inférieure du dispositif (9) d'extrémité d'aile sont en continuité avec les surfaces supérieure et inférieure de l'aile fixe (7) dans la configuration de vol fixe.

15. Aile (5) d'aéronef selon la revendication 13 ou la revendication 14, dans laquelle l'aile est apte à fonctionner dans la configuration de vol mobile pour réduire les charges, ou lorsque la vitesse de l'aéronef atteint un seuil juste en dessous de la vitesse de divergence aéro-élastique statique de l'aile, ou lorsque l'aéronef vole à une vitesse ou une altitude relativement faible et qu'un taux de roulis relativement élevé est requis.
